(19) Europäisches Patentamt
European Patent Office
Office européen des brevets

(11) **EP 4 510 044 A1**

(12) **EUROPEAN PATENT APPLICATION**

(43) Date of publication:
**19.02.2025   Bulletin 2025/08**

(21) Application number: **24182746.8**

(22) Date of filing: **18.06.2024**

(51) International Patent Classification (IPC):
**G06N 3/08** (2023.01)        **G06N 5/01** (2023.01)

(52) Cooperative Patent Classification (CPC):
**G06N 5/01; G06N 3/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.08.2023   JP 2023132079**

(71) Applicant: **FUJITSU LIMITED**
**Kawasaki-shi, Kanagawa 211-8588 (JP)**

(72) Inventor: **SUGIMURA, Masahiko**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **DATA PROCESSING PROGRAM, DATA PROCESSING METHOD, AND DATA PROCESSING APPARATUS**

(57)     A data processing program comprising instructions which, when executed by a computer, cause the computer to execute processing including: calculating, when a value of any one state variable among a plurality of state variables is updated in a solution search based on an evaluation function that includes the plurality of state variables, a first index value related to a change amount of a value of the evaluation function in a case where a value of a first state variable among the plurality of state variables is updated from values of the plurality of state variables before the update; and determining, based on the first index value, a length of a period of time during which update of the value of the first state variable is suppressed after the value of the first state variable is updated.

FIG. 1

**Description**

FIELD

The embodiments discussed herein are related to a data processing program, a data processing method, and a data processing apparatus.

BACKGROUND

An information processing device may be used to find a solution of a combinatorial optimization problem. The combinatorial optimization problem is formulated by, for example, an evaluation function representing energy of an Ising model, which is a model representing behavior of spins of a magnetic material.

The information processing device searches for, for example, a combination that minimizes a value of the evaluation function among combinations of values of state variables included in the evaluation function. In this case, the combination of the values of the state variables that minimizes the value of the evaluation function corresponds to a ground state or an optimal solution. Examples of a method of obtaining an approximate solution of the combinatorial optimization problem in a practical amount of time include a simulated annealing (SA) method, a tabu search method, and the like.

For example, there is a proposal of a method using a tabu search for a search for a candidate for an optimal setting value such as a voltage reference value or impedance of a voltage control device. In the proposed method, solutions obtained in past search processes and search movement patterns are stored in a tabu list, and the best solution is selected from solutions not included in the tabu list. In the proposed method, in a case where an amount of information in the tabu list exceeds a predetermined value, oldest information is removed.

Furthermore, there is a proposal of an information processing system that solves a large-scale problem in a distributed manner by a plurality of nodes using the SA method, the tabu search method, or the like.

Furthermore, there is a proposal of a system using the tabu search method for finding a solution of a vehicle routing problem (VRP).

Moreover, there is a proposal of a system that finds a solution to an objective function by a special tabu search that searches only a feasible space.

Japanese Laid-open Patent Publication No. 2003-209926, Japanese Laid-open Patent Publication No. 2022-164162, U.S. Patent Application Publication No. 2010/0088146, and U.S. Patent Application Publication No. 2014/0344322 are disclosed as related art.

SUMMARY

TECHNICAL PROBLEM

In a solution search based on an evaluation function as described above, after a value of a certain state variable is updated, update of the value of the state variable may be controlled to be suppressed for a certain period of time. In this case, there is a problem that solution finding performance may not be sufficiently improved when a length of the period of time is inappropriate.

In one aspect, an object of an embodiment is to improve solution finding performance.

SOLUTION TO PROBLEM

According to an aspect of the embodiments, there is provided a data processing program comprising instructions which, when executed by a computer, cause the computer to execute processing including: calculating, when a value of any one state variable among a plurality of state variables is updated in a solution search based on an evaluation function that includes the plurality of state variables, a first index value related to a change amount of a value of the evaluation function in a case where a value of a first state variable among the plurality of state variables is updated from values of the plurality of state variables before the update; and determining, based on the first index value, a length of a period of time during which update of the value of the first state variable is suppressed after the value of the first state variable is updated.

ADVANTAGEOUS EFFECTS OF INVENTION

In one aspect, it is possible to improve solution finding performance.

BRIEF DESCRIPTION OF DRAWINGS

FIG. 1 is a diagram for describing a data processing device of a first embodiment;
FIG. 2 is a diagram illustrating an example of hardware of a data processing device of a second embodiment;
FIG. 3 is a diagram illustrating a functional example of the data processing device;
FIG. 4 is a diagram illustrating an example of determining tabu tenure;
FIG. 5 is a flowchart illustrating an example of a solution search;
FIG. 6 is a flowchart illustrating an example of $TT_{i\_min}$ update processing;
FIG. 7 is a flowchart illustrating an example of $TT_{i\_min}$ update processing of a third embodiment;
FIG. 8 is a flowchart illustrating an example of a solution search of a fourth embodiment;
FIG. 9 is a flowchart illustrating an example of $TT_i$ update processing;
FIG. 10 is a flowchart illustrating another example of $TT_i$ update determination;
FIG. 11 is a flowchart illustrating another example of a $TT_i$ update method; and
FIG. 12 is a diagram illustrating an example of a relationship between tabu tenure and a time to reach an optimal solution.

DESCRIPTION OF EMBODIMENTS

Hereinafter, the present embodiments will be described with reference to the drawings.

[First Embodiment]

A first embodiment will be described.

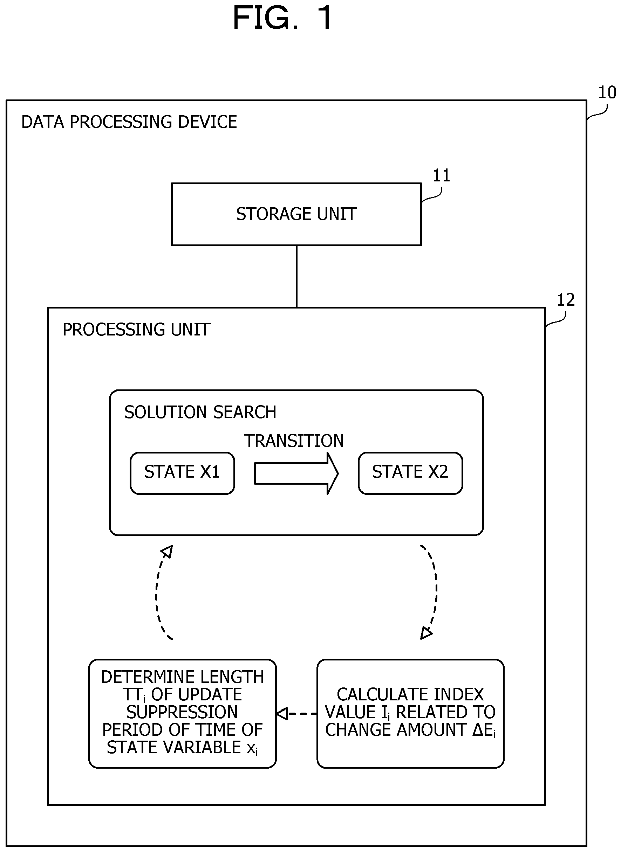

FIG. 1 is a diagram for describing a data processing device of the first embodiment.
A data processing device 10 is used to find a solution of a combinatorial optimization problem. The data processing device 10 includes a storage unit 11 and a processing unit 12.
The storage unit 11 may be a volatile semiconductor memory such as a random access memory (RAM) or may be a nonvolatile storage such as a hard disk drive (HDD) or a flash memory. The processing unit 12 is, for example, a processor such as a central processing unit (CPU), a graphics processing unit (GPU), or a digital signal processor (DSP). The processing unit 12 may include an electronic circuit for a specific application such as an application specific integrated circuit (ASIC) or a field programmable gate array (FPGA). The processing unit 12 may be a processor that executes a program stored in a memory such as a RAM (which may be the storage unit 11). A set of a plurality of processors may be referred to as a "multiprocessor" or simply "processors".
The combinatorial optimization problem is formulated by a predetermined evaluation function, and is replaced with, for example, a problem of minimizing a value of an evaluation function. The evaluation function represents, for example, energy of an Ising model. The evaluation function may also be referred to as an energy function, an objective function, or the like. The evaluation function includes a plurality of state variables. The state variable is a binary variable that takes a value of 0 or 1. The state variable may be referred to as a bit. A solution of the combinatorial optimization problem is represented by values of the plurality of state variables. A solution that minimizes the value of the evaluation function represents a ground state of the Ising model, and corresponds to an optimal solution of the combinatorial optimization problem. The value of the evaluation function, in other words, an evaluation value, may be referred to as energy.
The Ising-type evaluation function is represented by Expression (1).
[Expression 1]

$$E(\boldsymbol{x}) = \sum_{i=1}^{N}\sum_{j=1}^{N} W_{ij}x_i x_j + \sum_{i=1}^{N} b_i x_i \qquad (1)$$

A state vector x has the plurality of state variables as elements, and represents a state of the Ising model. Expression (1) is the evaluation function formulated in a quadratic unconstrained binary optimization (QUBO) format. In the case of a problem of maximizing the value of the evaluation function, it is sufficient to reverse a sign of the evaluation function.
A first term on a right side of Expression (1) is to integrate products of values of two state variables with a weighting coefficient without omission and duplication for all combinations of two state variables that may be selected from all the state variables. Indices of the state variables are denoted by subscripts i and j. An i-th state variable is denoted by $x_i$. A j-th

state variable is denoted by $x_j$. A weighting coefficient indicating a weight or coupling strength between the i-th state variable and the j-th state variable is denoted by $W_{ij}$. $W_{ij} = W_{ji}$ and $W_{ii} = 0$ are satisfied. The number of all the state variables is denoted by N.

A second term on the right side of Expression (1) is to obtain a total sum of products of the respective biases for all the state variables and the values of the state variables. A bias for the i-th state variable is denoted by $b_i$. Problem information including the weighting coefficients, the biases, or the like included in the evaluation function is stored in the storage unit 11.

When a value of the state variable $x_i$ changes to $1 - x_i$, an increment of the state variable $x_i$ may be represented as $\Delta x_i = (1 - x_i) - x_i = 1 - 2x_i$. For an energy function E(x), an energy change amount $\Delta E_i$ associated with the change in the state variable $x_i$ is represented by Expression (2).

[Expression 2]

$$\Delta E_i = (1 - 2x_i) \left( \sum_{j=1}^{N} W_{ij}x_j + b_i \right) \qquad (2)$$

When the state variable $x_i$ changes from 0 to 1 or from 1 to 0 such that $\Delta E_i < 0$ is satisfied, the energy E(x) decreases. In this case, a solution after the change of $x_i$ is an improved solution obtained by improving a current solution.

Here, the processing unit 12 performs a solution search using a tabu search method. The tabu search method is a search method based on a greedy search. The greedy search is a method in which a procedure of calculating $\Delta E_i$ in a case where the respective values of all the state variables are changed for a current state, selecting a state variable that minimizes $\Delta E_i$, and flipping a value of the state variable to obtain the next state is repeated.

On the other hand, in the tabu search method, a value of a state variable that has been changed once is fixed for a predetermined period of time. Update of the value of the state variable is performed for a state variable that the minimizes $\Delta E_i$ among state variables not to be fixed. As a result, the tabu search method suppresses repeated operations of the same state transition in the case of falling into a local solution, in other words, all states where $\Delta E_i > 0$ is satisfied, and makes it possible to widely search a solution space.

In the tabu search method, a length of the period of time during which the value of the state variable is fixed, in other words, a length of a period of time during which update of the value of the state variable is suppressed is referred to as tabu tenure. Tabu tenure corresponding to the state variable $x_i$ is represented as $TT_i$. The $TT_i$ is held in the storage unit 11. In other words, the storage unit 11 stores, for each of the plurality of state variables, a length of a period of time during which update of a value of the state variable is suppressed after the value of the state variable is updated. An initial value of the $TT_i$ for each state variable may be 0 or a predetermined value larger than 0. Furthermore, for each of the plurality of state variables, information indicating the period of time during which the value of the state variable is fixed may be held in the storage unit 11. For example, the period of time during which the value of the state variable is fixed is determined by specifying a timing of releasing the fixation by the number of attempts of the state transition (= the current number of iterations + (the number of iterations corresponding to the tabu tenure $TT_i$)). Note that, hereinafter, it is assumed that the tabu tenure $TT_i$ is represented by the number of iterations.

The processing unit 12 determines tabu tenure for each state variable as follows.

The processing unit 12 updates a value of any one state variable among a plurality of state variables in a solution search based on an evaluation function. For example, by flipping a value of one state variable that minimizes a change amount $\Delta E$ of a value of the evaluation function for a state X1 represented by the plurality of state variables, the value of the state variable is updated, and the state X1 undergoes a transition to a state X2. Then, the processing unit 12 calculates a first index value related to a change amount of the value of the evaluation function in a case where a value of a first state variable is updated among values of the plurality of state variables before the update, in other words, values of the plurality of state variables in the state X1.

As will be described later, the processing unit 12 may set the state variable whose value has been updated this time in the solution search as the first state variable. Alternatively, the processing unit 12 may select each of all the state variables as the first state variable every time the state transition is attempted a predetermined number of times in the solution search.

Here, an absolute value of a change amount of an evaluation function E(x) in a case where a value of a first state variable $x_i$ is updated from the values of the plurality of state variables before the update of this time is defined as $|\Delta E_i|$. Furthermore, a maximum value of the absolute value of the change amount of the evaluation function E(x) in a case where a value of any one state variable is updated from the values of the plurality of state variables before the update of this time is defined as $\max_j |\Delta E_j|$. For example, the processing unit 12 calculates a first index value $I_i$ by dividing $|\Delta E_i|$ by $\max_j |\Delta E_j|$. In this case, $I_i = |\Delta E_i| / \max_j |\Delta E_j|$ is satisfied. Note that the processing unit 12 may extract j from indices other than i.

The first index value $I_i$ is an index relatively representing, for all the state variables, a degree of change in a value of the evaluation function $E(x)$ by updating the value of the state variable $x_i$. It is indicated that the larger the first index value $I_i$, the larger an influence on the value of the evaluation function $E(x)$ by updating the value of the state variable $x_i$ among all the state variables. On the other hand, it is indicated that the smaller the first index value $I_i$, the smaller the influence on the value of the evaluation function $E(x)$ by updating the value of the state variable $x_i$ among all the state variables.

The processing unit 12 determines, based on the first index value $I_i$, a length of a period of time during which update of the value of the first state variable is suppressed after the value of the first state variable is updated, in other words, the tabu tenure $TT_i$.

For example, the processing unit 12 may compare the first index value $I_i$ with a first threshold Th1, and increase the $TT_i$ in a case where the first index value $I_i$ is smaller than the first threshold Th1. This is because a state variable having a small influence on the value of the evaluation function $E(x)$ has a low value of updating the value in the solution search. In this case, the processing unit 12 may increase the $TT_i$ such that $TT_i = TT_i + \alpha$ is satisfied. A predetermined positive integer is denoted by a.

Furthermore, the processing unit 12 may compare the first index value $I_i$ with a second threshold Th2, and decrease the $TT_i$ in a case where the first index value $I_i$ is larger than the second threshold Th2. This is because a state variable having a large influence on the value of the evaluation function $E(x)$ has a high value of updating the value in the solution search. In this case, the processing unit 12 may decrease the $TT_i$ such that $TT_i = TT_i - \beta$ is satisfied. A predetermined positive integer is denoted by $\beta$.

The first threshold Th1 may be a value smaller than the second threshold Th2 (Th1 < Th2). The processing unit 12 does not have to change the $TT_i$ in a case where $Th1 \leq I_i \leq Th2$ is satisfied.

The determined $TT_i$ is used for control to suppress the update of the value of the first state variable $x_i$ in the solution search. The processing unit 12 sets the period of time during which the value of the first state variable $x_i$ is fixed by the $TT_i$ as follows, for example.

In a first example, the first state variable $x_i$ is the same state variable as the state variable whose value has been updated this time in the solution search. In other words, the processing unit 12 specifies the state variable whose value has been updated this time in the solution search as the first state variable $x_i$.

In this case, when the tabu tenure $TT_i$ for the first state variable $x_i$ is determined, the processing unit 12 sets, based on the determined $TT_i$, the period of time during which the update of the value of the first state variable $x_i$ is suppressed immediately after the update of this time, in other words, an update suppression period of time. For example, the processing unit 12 suppresses the update of the value of the first state variable $x_i$ up to the number of iterations $TL_i$ obtained by adding the $TT_i$ to the current number of iterations of the solution search. A termination of the update suppression period of time is represented by $TL_i$, which is referred to as a tabu limit.

In a second example, the processing unit 12 selects each of all the state variables as the first state variable every time the state transition is attempted a predetermined number of times in the solution search. In other words, the processing unit 12 collectively updates tabu tenure of all the state variables every time the state transition is attempted the predetermined number of times. In this case, when a value of a certain state variable $x_i$ is updated in the solution search, the processing unit 12 sets the $TL_i$ described above using the determined $TT_i$ before changing $TT_i$ for the $x_i$.

When the solution search by the tabu search method is performed using the tabu tenure $TT_i$ determined for each state variable for a certain period of time in this manner, the processing unit 12 outputs, as a final solution, a solution that minimizes the value of the evaluation function among solutions obtained by the solution search. The processing unit 12 may preferentially output a plurality of solutions having a smaller value of the evaluation function among the obtained solutions.

As described above, according to the data processing device 10, in the solution search based on the evaluation function including the plurality of state variables, the value of any one state variable among the plurality of state variables is updated. Then, from the values of the plurality of state variables, the first index value related to the change amount of the value of the evaluation function in a case where the value of the first state variable is updated among the plurality of state variables is calculated. Based on the first index value, the length of the period of time during which the update of the value of the first state variable is suppressed after the value of the first state variable is updated is determined.

As a result, the data processing device 10 may improve solution finding performance. Specifically, the data processing device 10 may appropriately determine, for each of the plurality of state variables, the length of the period of time during which the update of the value of the state variable is suppressed based on the first index value. For example, the data processing device 10 reduces the length of the period of time for a state variable evaluated to have a high value of updating the value at a current time point by the first index value. On the other hand, the data processing device 10 increases the length of the period of time for a state variable evaluated to have a low value of updating the value at the current time point by the first index value. In this manner, the data processing device 10 dynamically adjusts the period of time for each state variable according to a situation, thereby making it easier to reach more various solutions and increasing a possibility of obtaining a better solution.

Note that the processing unit 12 may calculate a second index value related to an update frequency of the value of the first state variable in addition to the first index value related to the change amount of the value of the evaluation function. The processing unit 12 may determine the length of the period of time during which the update of the value of the first state variable is suppressed based on the first index value and the second index value. For example, a state variable evaluated to have a high update frequency based on the second index value has a low value of updating the value in the solution search. On the other hand, a state variable evaluated to have a low update frequency based on the second index value has a high value of updating the value in the solution search.

Therefore, based on both the first index value and the second index value, the processing unit 12 may shorten the period of time during which the update of the value is suppressed for the state variable evaluated to have the high value of updating the value. Based on both the first index value and the second index value, the processing unit 12 may lengthen the period of time during which the update of the value is suppressed for the state variable evaluated to have the low value of updating the value. In this manner, the data processing device 10 may more appropriately determine the length of the period of time during which the update of the value is suppressed for each state variable by using the second index value in addition to the first index value. As a result, the data processing device 10 may further improve the solution finding performance.

Furthermore, in the above description, the example has been described in which the processing unit 12 performs the solution search. However, a search unit implemented by an FPGA, a GPU, or the like may perform the solution search by the tabu search method according to an instruction from the processing unit 12, and may respond to the processing unit 12 with a search result. In that case, the search unit may be included in the data processing device 10 or may be included in another device communicating with the data processing device 10. In a case where the solution search is implemented by the search unit different from the processing unit 12, the processing unit 12 may set the tabu tenure for each state variable determined by the method described above in the search unit. The processing unit 12 may determine the period of time during which the value of the corresponding state variable is fixed based on the tabu tenure, and set the period of time in the search unit. For example, the processing unit 12 may set the period of time by specifying a termination of the period of time (= the current number of iterations + tabu tenure).

[Second Embodiment]

Next, a second embodiment will be described.

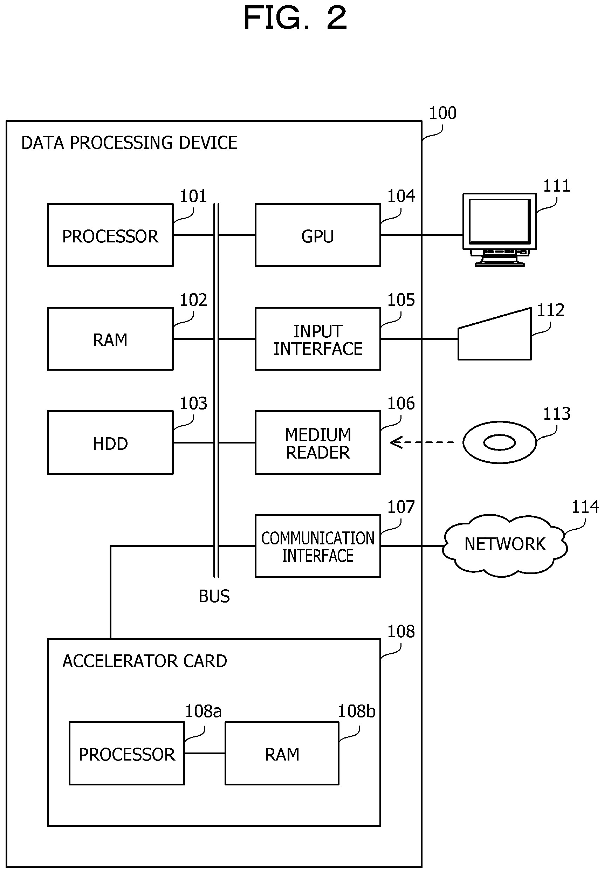

FIG. 2 is a diagram illustrating an example of hardware of a data processing device of the second embodiment.
A data processing device 100 searches for a solution to a combinatorial optimization problem by using the tabu search method, and outputs a searched solution. The combinatorial optimization problem is formulated by the Ising-type energy function of Expression (1), and is replaced with, for example, a problem of minimizing a value of the energy function.
The data processing device 100 includes a processor 101, a RAM 102, an HDD 103, a GPU 104, an input interface 105, a medium reader 106, a communication interface 107, and an accelerator card 108. These units included in the data processing device 100 are coupled to a bus inside the data processing device 100. The processor 101 corresponds to the processing unit 12 of the first embodiment. The RAM 102 or the HDD 103 corresponds to the storage unit 11 of the first embodiment.
The processor 101 is a general-purpose processor that executes a program command. The processor 101 is, for example, a CPU. The processor 101 loads at least a part of a program and data stored in the HDD 103 into the RAM 102, and executes the program. Note that the processor 101 may include a plurality of processor cores. Furthermore, the data processing device 100 may include a plurality of processors. Processing to be described below may be executed in parallel by using the plurality of processors or processor cores. Furthermore, a set of the plurality of processors may be referred to as a "multiprocessor" or simply "processors".
The RAM 102 is a volatile semiconductor memory that temporarily stores a program to be executed by the processor 101 and data to be used by the processor 101 for arithmetic operations. Note that the data processing device 100 may include a memory of a type other than the RAM, or may include a plurality of memories.
The HDD 103 is a nonvolatile storage device that stores software programs such as an operating system (OS), middleware, and application software, and data. Note that the data processing device 100 may include another type of storage device such as a flash memory or a solid state drive (SSD), or may include a plurality of nonvolatile storage devices.
The GPU 104 outputs an image to a display 111 coupled to the data processing device 100 according to a command from the processor 101. As the display 111, an optional type of display such as a cathode ray tube (CRT) display, a liquid crystal display (LCD), a plasma display, or an organic electro-luminescence (OEL) display may be used.
The input interface 105 acquires input signals from an input device 112 coupled to the data processing device 100, and outputs the input signals to the processor 101. As the input device 112, a pointing device such as a mouse, a touch panel, a touch pad, or a trackball, a keyboard, a remote controller, a button switch, or the like may be used. Furthermore, a plurality of types of input devices may be coupled to the data processing device 100.
The medium reader 106 is a reading device that reads a program and data recorded in a recording medium 113.

As the recording medium 113, for example, a magnetic disk, an optical disk, a magneto-optical (MO) disk, a semiconductor memory, or the like may be used. The magnetic disk includes a flexible disk (FD) and an HDD. The optical disk includes a compact disc (CD) and a digital versatile disc (DVD).

The medium reader 106 copies, for example, a program and data read from the recording medium 113 to another recording medium such as the RAM 102 or the HDD 103. The read program is executed by, for example, the processor 101. Note that the recording medium 113 may be a portable recording medium, and may be used for distribution of the program and the data. Furthermore, the recording medium 113 and the HDD 103 may be referred to as computer-readable recording media.

The communication interface 107 is coupled to a network 114, and communicates with another information processing device via the network 114. The communication interface 107 may be a wired communication interface coupled to a wired communication device such as a switch or a router, or may be a wireless communication interface coupled to a wireless communication device such as a base station or an access point.

The accelerator card 108 is a hardware accelerator that executes the tabu search method based on an energy function of an Ising model. The accelerator card 108 includes a processor 108a and a RAM 108b. The processor 108a is, for example, a dedicated processor such as a GPU, an FPGA, or an ASIC. The processor 108a executes the tabu search method according to a command of the processor 101, and responds with a solution obtained by a search. The RAM 108b is a memory that stores data used for processing by the processor 108a.

A device that finds a solution of a problem represented by an Ising-type energy function, in other words, an Ising problem, such as the accelerator card 108 or the data processing device 100, may be referred to as an Ising machine.

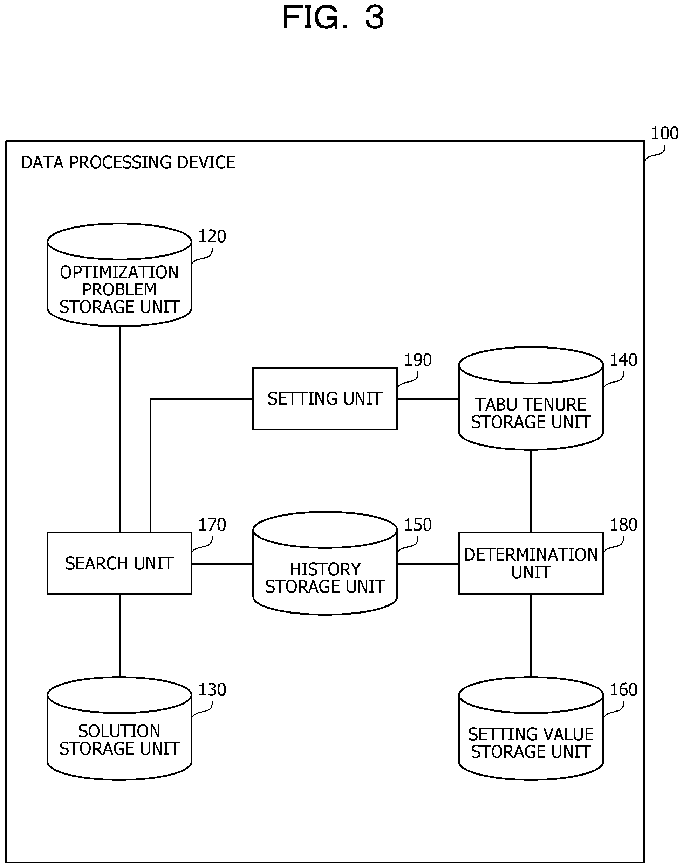

FIG. 3 is a diagram illustrating a functional example of the data processing device.

The data processing device 100 includes an optimization problem storage unit 120, a solution storage unit 130, a tabu tenure storage unit 140, a history storage unit 150, a setting value storage unit 160, a search unit 170, a determination unit 180, and a setting unit 190. For example, storage areas of the RAM 102 and the HDD 103 are used for the optimization problem storage unit 120, the solution storage unit 130, the tabu tenure storage unit 140, the history storage unit 150, and the setting value storage unit 160.

The search unit 170 is implemented by, for example, the processor 108a. The determination unit 180 and the setting unit 190 are implemented by, for example, the processor 101 executing a program stored in the RAM 102.

The optimization problem storage unit 120 stores problem information of the combinatorial optimization problem. The problem information includes information regarding the energy function of Expression (1). The solution storage unit 130 stores a solution searched for by the search unit 170.

The tabu tenure storage unit 140 stores tabu tenure for each state variable determined by the determination unit 180.

The history storage unit 150 stores history information of a solution search in the search unit 170. The history information includes the number of times a value of any one state variable has been updated, an energy change amount calculated for each state variable for selection of a state variable whose value is to be updated in the tabu search method, and the like. The number of times the value of any one state variable has been updated, in other words, the number of times a state transition has been performed in the solution search is referred to as the number of iterations.

The setting value storage unit 160 stores a setting value input by a user and used for processing of the determination unit 180. The setting value is information representing calculation of an index value for determining tabu tenure, a timing of determining the tabu tenure, and the like.

The search unit 170 performs a solution search by the tabu search method based on problem information stored in the optimization problem storage unit 120. The search unit 170 calculates, based on Expression (2), an energy change amount $\Delta E$ in a case where a value of each state variable is flipped for a state represented by a plurality of state variables. The search unit 170 causes a current state to undergo a transition to the next state by flipping a value of a state variable that minimizes $\Delta E$ among state variables for which periods of time during which values are fixed have expired.

Here, based on tabu tenure for each state variable determined by the determination unit 180, the search unit 170 calculates a period of time during which update of a value of the state variable is suppressed after the value of the state variable is updated, in other words, a period of time during which the value of the state variable is fixed. Tabu tenure corresponding to a state variable $x_i$ is represented as $TT_i$. Furthermore, a period of time during which update of a value of the state variable $x_i$ is suppressed in a case where the value of the state variable $x_i$ is updated is specified by a tabu limit $TL_i$ representing a termination of the period of time. The search unit 170 sets the tabu limit $TL_i$ = (the current number of iterations of the solution search) + (tabu tenure $TT_i$).

The determination unit 180 determines tabu tenure for each state variable based on information stored in the history storage unit 150 and the setting value storage unit 160, and stores the tabu tenure in the tabu tenure storage unit 140.

The setting unit 190 sets tabu tenure for each state variable in the search unit 170.

Note that the search unit 170 may be implemented by the processor 101 executing a program stored in the RAM 102. In that case, the data processing device 100 does not have to include the accelerator card 108. Alternatively, the search unit 170, the determination unit 180, and the setting unit 190 may be implemented by the processor 108a. Furthermore, at least a part of the optimization problem storage unit 120, the solution storage unit 130, the tabu tenure storage unit 140, the history storage unit 150, and the setting value storage unit 160 may be implemented by a storage area of the RAM 108b.

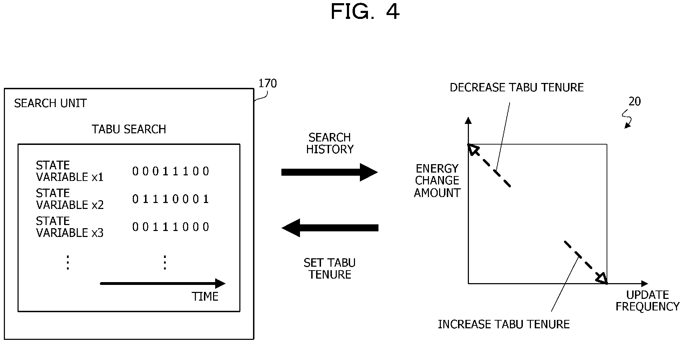

FIG. 4 is a diagram illustrating an example of determining tabu tenure.

The search unit 170 performs a solution search by the tabu search method. As described above, the search unit 170 performs update to flip a value of one state variable that minimizes the $\Delta E$ for each iteration to cause a state represented by a plurality of state variables to undergo a transition. The search unit 170 holds tabu tenure and a tabu limit for each state variable.

For example, in a case where the tabu tenure $TT_i = 3$ is satisfied, the search unit 170 prohibits the update of the value of the state variable $x_i$ until a second step after the value of the corresponding state variable is updated, and permits the update of the value of the state variable $x_i$ from a third step. In FIG. 4, a state transition in a case where tabu tenure of each of state variables x1, x2, and x3 is 3 is exemplified. A set of values of the state variables x1, x2, x3,... arranged vertically corresponds to one state. A horizontal axis indicates a time. A lapse of time is represented by the number of iterations. An initial value of the number of iterations is 0.

Note that the present control is an example, and in another example, in a case where the tabu tenure $TT_i = 3$ is satisfied, the search unit 170 may perform control so as to prohibit the update of the value of the state variable $x_i$ until the third step after the value of the corresponding state variable is updated, and permit the update of the value of the state variable $x_i$ from a fourth step.

The determination unit 180 acquires a search history of a solution by the tabu search method by the search unit 170, and determines tabu tenure for each state variable based on the search history. A graph 20 exemplifies a method of determining tabu tenure for a state variable by the determination unit 180. A horizontal axis of the graph 20 indicates an update frequency of a value of a state variable of interest. A vertical axis of the graph 20 indicates an energy change amount in a case where the value of the state variable of interest is updated from a current state.

The determination unit 180 evaluates that the larger the update frequency and the smaller the energy change amount, the lower a value of updating the value of the corresponding state variable, and increases tabu tenure for the state variable. On the other hand, the determination unit 180 evaluates that the smaller the update frequency and the larger the energy change amount, the higher the value of updating the value of the corresponding state variable, and decreases tabu tenure for the state variable.

Here, in the example of the second embodiment, the determination unit 180 determines the tabu tenure $TT_i$ for a state variable whose value has been updated this time in the solution search.

The determination unit 180 calculates an index value Frequency in order to evaluate the update frequency of the corresponding state variable. In the example of the second embodiment, for the state variable $x_i$, the Frequency = (current $TT_i$)/(the number of iterations from update of the value of the state variable $x_i$ of a previous time) is satisfied.

A value range of the Frequency is 0.0 to 1.0. For example, in a case where the corresponding state variable is always changed when there is a flipping opportunity, the Frequency becomes 1.0. On the other hand, in a case where the value of the corresponding state variable is hardly updated, the Frequency becomes a value close to 0.0.

Furthermore, the determination unit 180 calculates an index value Impact in order to evaluate a degree of the energy change amount in a case where the value of the corresponding state variable is updated. For the state variable $x_i$, the Impact = (an absolute value of the energy change amount in a case where the value of the state variable $x_i$ is updated)/(a maximum value of the absolute value of the energy change amount in a case where a value of another state variable is updated) is satisfied. The index value Impact may be referred to as an energy change rate in a case where the value of the corresponding state variable is updated.

A value range of the Impact is 0.0 to 1.0. As a relative energy change caused by updating the value of the state variable $x_i$ is smaller, the Impact becomes a value closer to 0.0. On the other hand, as the relative energy change is larger, the Impact becomes a value closer to 1.0. Note that, in a case where the energy change amount in a case where the value of the state variable $x_i$ is updated is a maximum value of the change amount for each of all the state variables, the Impact for the state variable $x_i$ becomes 1.0. Here, in the tabu search method, the energy change amount $\Delta E$ in a case where values of the state variables are updated is calculated for all the state variables in each iteration. Thus, the determination unit 180 may acquire the $\Delta E$ for each of all the state variables from the search unit 170.

The determination unit 180 determines the tabu tenure $TT_i$ for the corresponding state variable based on the Frequency and the Impact.

Then, the setting unit 190 sets the tabu tenure for each state variable determined by the determination unit 180 in the search unit 170.

Next, a processing procedure of the data processing device 100 will be described.

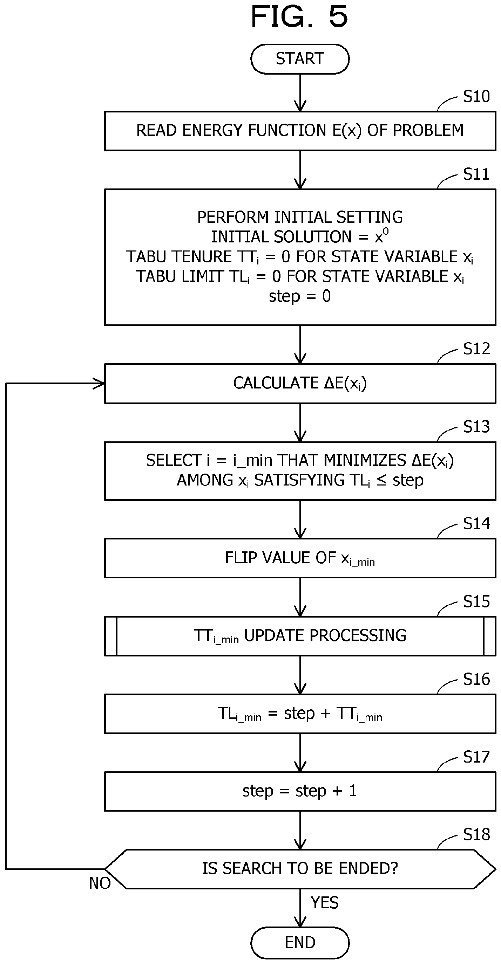

FIG. 5 is a flowchart illustrating an example of a solution search.

(S10) The search unit 170 reads the energy function E(x) of a problem.

(S11) The search unit 170 performs initial setting. In the initial setting, an initial solution $x^0$, the tabu tenure $TT_i = 0$

for the state variable $x_i$, the tabu limit $TL_i = 0$ for the state variable $x_i$, and a variable step = 0 are set. The variable step is a variable used for counting the number of iterations from a start of the search. The initial solution $x°$ may be generated by randomly determining a value of each state variable using, for example, a random number or the like. Furthermore, the tabu tenure $TT_i$ and the tabu limit $TL_i$ are set for all indices i, and are held in the storage unit such as the RAM 108b used by the search unit 170. Furthermore, in the initial setting, a final value of the number of iterations used for end determination of the solution search is also set.

(S12) The search unit 170 calculates $\Delta E(x_i)$ for all $x_i$. Here, $\Delta E(x_i) (= \Delta E_i)$ indicates an energy change amount in a case where the value of the state variable $x_i$ is updated for a current state.

(S13) The search unit 170 selects an index i = i_min that minimizes the $\Delta E(x_i)$ among $x_i$ satisfying $TL_i \leq$ step.

(S14) The search unit 170 flips a value of a state variable $x_{i\_min}$. Note that the search unit 170 stores, in the solution storage unit 130, a solution obtained by flipping the value of the state variable $x_{i\_min}$ and energy of the solution. For example, the search unit 170 may preferentially store, in the solution storage unit 130, a predetermined number of solutions having low energy among solutions obtained so far. Furthermore, the search unit 170 records, in the history storage unit 150, a current step value and the index i_min of the state variable $x_{i\_min}$ whose value has been flipped this time in association with each other.

(S15) The determination unit 180 performs tabu tenure $TT_{i\_min}$ update processing. The $TT_{i\_min}$ determined by the determination unit 180 is set in the search unit 170 by the setting unit 190. Details of the $TT_{i\_min}$ update processing will be described later.

(S16) The search unit 170 sets $TL_{i\_min} =$ step + $TT_{i\_min}$.

(S17) The search unit 170 sets step = step + 1.

(S18) The search unit 170 determines whether or not the search is to be ended. In a case where the search is to be ended, the solution search ends. In a case where the search is to be ended, the search unit 170 outputs a predetermined number of solutions by giving priority to a solution with minimum energy or a solution with low energy held in the solution storage unit 130. In a case where the search is to be continued, the processing proceeds to step S12. For example, the search unit 170 determines that the search is to be ended in a case where step > (a predetermined final value) is satisfied, and determines that the search is to be continued in a case where step $\leq$ (the predetermined final value) is satisfied.

Note that, in step S13, in a case where a minimum value of energy of the solutions obtained so far is updated by flipping the state variable $x_i$, the search unit 170 may select the i = i_min regardless of the $TL_i$.

Furthermore, in step S14, the search unit 170 does not have to store, in the solution storage unit 130, the index obtained by flipping the value for all the iterations as history information, and it is sufficient that history information for a certain period of time needed for determining tabu tenure is stored. In the example of the second embodiment, it is sufficient that the number of iterations in which the value has been flipped at a previous time for each state variable is held in the solution storage unit 130 in order to calculate the Frequency.

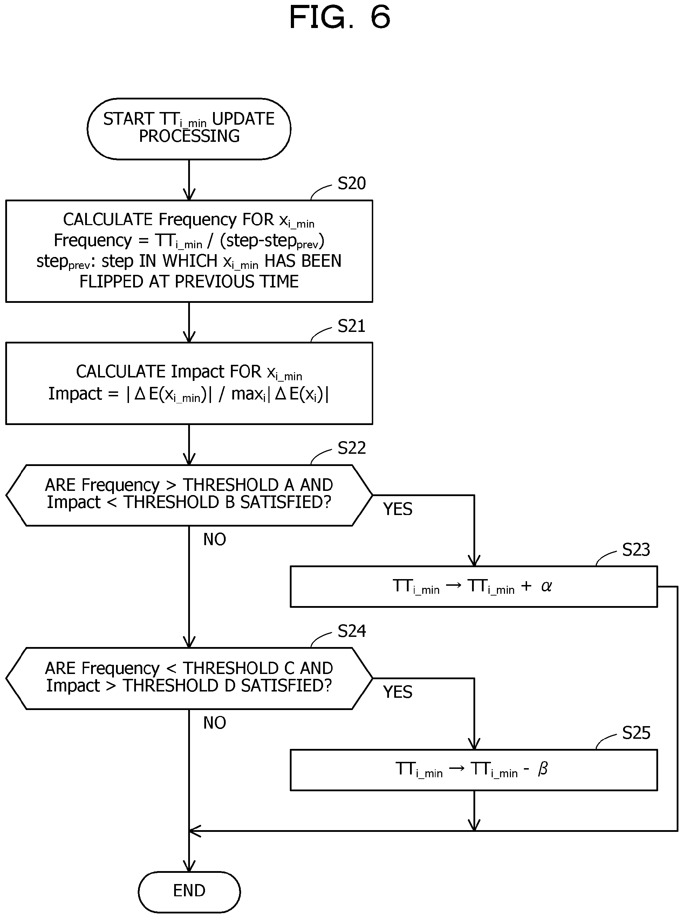

FIG. 6 is a flowchart illustrating an example of the $TT_{i\_min}$ update processing.

The $TT_{i\_min}$ update processing corresponds to step S15.

(S20) The determination unit 180 calculates the index value Frequency of an update frequency for the $x_{i\_min}$. The Frequency = $TT_{i\_min}/(step - step_{prev})$ is satisfied. The $step_{prev}$ is a step in which the $x_{i\_min}$ has been flipped at the previous time.

Note that the determination unit 180 acquires the $TT_{i\_min}$ from the tabu tenure storage unit 140. The determination unit 180 acquires the $step_{prev}$ from the history storage unit 150.

(S21) The determination unit 180 calculates the index value Impact of the energy change amount for the $x_{i\_min}$. The Impact = $|\Delta E(x_{i\_min})|/max_i|\Delta E(x_i)|$ is satisfied.

(S22) The determination unit 180 determines whether or not the Frequency > a threshold A and the Impact < a threshold B are satisfied. In a case where the Frequency > the threshold A and the Impact < the threshold B are satisfied, the processing proceeds to step S23. In a case where at least one of the Frequency $\leq$ the threshold A and the Impact $\geq$ the threshold B is satisfied, the processing proceeds to step S24. The thresholds A and B are determined in advance by a user.

(S23) The determination unit 180 updates the $TT_{i\_min}$ to $TT_{i\_min} + \alpha$. In other words, the determination unit 180 increases the $TT_{i\_min}$ by $\alpha$. The a is determined in advance by the user. The determination unit 180 stores the updated $TT_{i\_min}$ in the tabu tenure storage unit 140 in association with the index i_min. The setting unit 190 sets the updated $TT_{i\_min}$ for the state variable $x_{i\_min}$ in the search unit 170. Then, the $TT_{i\_min}$ update processing ends.

(S24) The determination unit 180 determines whether or not the Frequency < a threshold C and the Impact > a threshold D are satisfied. In a case where the Frequency < the threshold C and the Impact > the threshold D are satisfied, the processing proceeds to step S25. In a case where at least one of the Frequency $\geq$ the threshold C and the Impact $\leq$ the threshold D is satisfied, the $TT_{i\_min}$ update processing ends without changing the $TT_{i\_min}$. The thresholds C and D are determined in advance by the user. Note that C $\leq$ A is satisfied. D $\geq$ B is satisfied.

(S25) The determination unit 180 updates the $TT_{i\_min}$ to $TT_{i\_min} - \beta$. In other words, the determination unit 180 decreases the $TT_{i\_min}$ by $\beta$. The $\beta$ is determined in advance by the user. The determination unit 180 stores the updated $TT_{i\_min}$ in the tabu tenure storage unit 140 in association with the index i_min. The setting unit 190 sets the updated $TT_{i\_min}$

for the state variable $x_{i\_min}$ in the search unit 170. Then, the $TT_{i\_min}$ update processing ends.

As a state variable for which a smaller value of tabu tenure is set, a period of time during which the value is fixed becomes shorter, so that the value of the state variable is easily updated. The data processing device 100 decreases tabu tenure of a state variable evaluated to have a high value of updating the value and increases tabu tenure of a state variable evaluated to have a low value of updating the value.

In this manner, the determination unit 180 adaptively determines tabu tenure for each state variable based on the index value Frequency and the index value Impact. As a result, the data processing device 100 may appropriately determine the tabu tenure. Furthermore, the data processing device 100 may appropriately determine a period of time during which update of a value is suppressed for each state variable in a solution search based on the determined tabu tenure. As a result, the data processing device 100 may increase a possibility of reaching a better solution, and improve the solution finding performance.

[Third Embodiment]

Next, a third embodiment will be described. Matters different from the second embodiment described above will be mainly described, and description of common matters will be omitted.

Hardware and functions of a data processing device 100 of the third embodiment are similar to those of the second embodiment. However, in the third embodiment, a determination unit 180 calculates Frequency and Impact every time a value of a state variable $x_i$ is updated a predetermined number of times (M times), and determines tabu tenure $TT_i$ based on the Frequency and the Impact. Therefore, when the $TT_i$ is updated, the determination unit 180 stores the number of iterations (= a value of step) when the $TT_i$ is updated in a tabu tenure storage unit 140 in association with an index i. Note that the M is an integer equal to or larger than 1.

In the example of the third embodiment, for the state variable $x_i$, the Frequency = (current $TT_i$) × M/(the number of iterations from update of the value of the state variable $x_i$ M times before) is satisfied. A value range of the Frequency is 0.0 to 1.0. For example, in a case where the corresponding state variable is always changed when there is a flipping opportunity, the Frequency becomes 1.0. On the other hand, in a case where the value of the corresponding state variable is hardly updated, the Frequency becomes a value close to 0.0. A calculation expression of the Impact is the same as that of the second embodiment.

Next, a processing procedure of the data processing device 100 of the third embodiment will be described. A procedure of a solution search of the third embodiment is similar to the procedure of the second embodiment described with reference to FIG. 5.

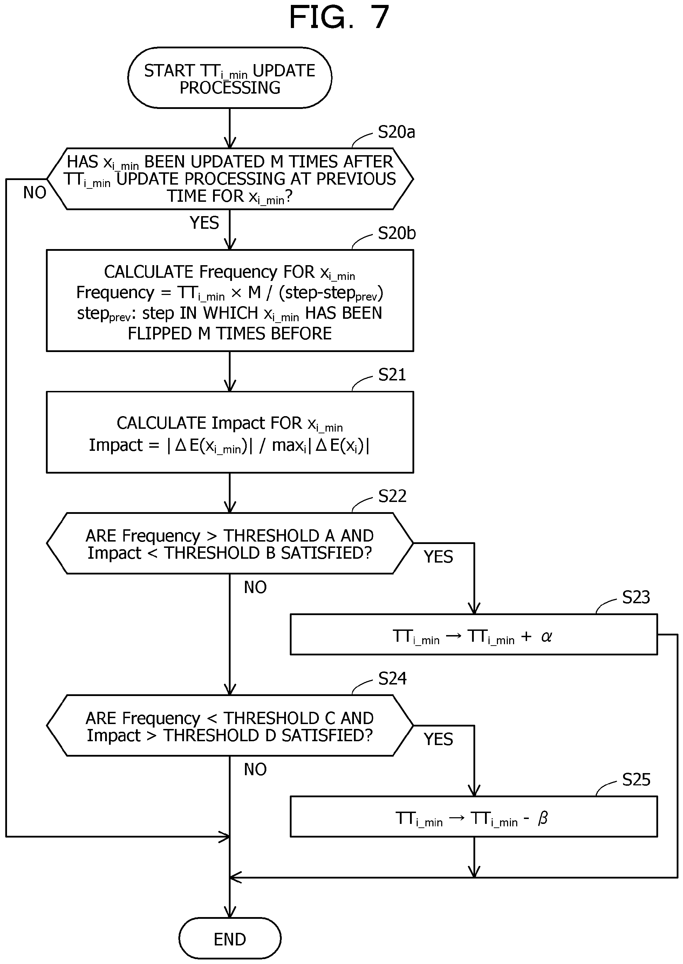

FIG. 7 is a flowchart illustrating an example of $TT_{i\_min}$ update processing of the third embodiment.

The $TT_{i\_min}$ update processing corresponds to step S15. The third embodiment is different from the second embodiment in that steps S20a and S20b are executed instead of step S20 in FIG. 6. Thus, steps S20a and S20b will be mainly described, and description of steps S21 to S25 will be omitted.

(S20a) The determination unit 180 determines whether or not a value of a state variable $x_{i\_min}$ has been updated M times after the tabu tenure $TT_{i\_min}$ update processing at a previous time for the state variable $x_{i\_min}$. The M is preset by a user. In a case where the value of the $x_{i\_min}$ has been updated M times, the processing proceeds to step S20b. In a case where the value of the $x_{i\_min}$ has not been updated M times, the $TT_{i\_min}$ update processing ends.

Note that the determination unit 180 may specify, from the tabu tenure storage unit 140, the number of iterations in which the $TT_{i\_min}$ has been updated at a previous time for the $x_{i\_min}$. Furthermore, the determination unit 180 acquires the number of times of update of the $x_{i\_min}$ to a current iteration from the number of iterations based on information stored in a history storage unit 150.

(S20b) The determination unit 180 calculates the index value Frequency of an update frequency for the $x_{i\_min}$. The Frequency = $TT_{i\_min}$ × M/(step - $step_{prev}$) is satisfied. The $step_{prev}$ is a step in which the $x_{i\_min}$ has been flipped M times before. Note that the determination unit 180 acquires the $TT_{i\_min}$ from the tabu tenure storage unit 140. The determination unit 180 acquires the $step_{prev}$ from the history storage unit 150. Then, the processing proceeds to step S21.

In this manner, the determination unit 180 adaptively determines tabu tenure for each state variable based on the two index values of the Frequency and the Impact. As a result, the data processing device 100 may appropriately determine the tabu tenure. Furthermore, the data processing device 100 may appropriately determine a period of time during which update of a value is suppressed for each state variable in a solution search based on the determined tabu tenure. As a result, the data processing device 100 may increase a possibility of reaching a better solution, and improve solution finding performance.

Furthermore, the data processing device 100 may also adjust a change timing of the tabu tenure $TT_{i\_min}$ for the state variable $x_{i\_min}$ by setting of the M. For example, by appropriately setting the M according to a problem, there is a possibility that solution finding performance for the problem may be improved. Furthermore, by setting the M to a value of equal to or larger than 2, the data processing device 100 may reduce the number of times of executing tabu tenure $TT_i$ update processing as compared with the second embodiment, and improve the solution finding performance while reducing a load associated with the update processing.

[Fourth Embodiment]

Next, a fourth embodiment will be described. Matters different from the second and third embodiments described above will be mainly described, and description of common matters will be omitted.

Hardware and functions of a data processing device 100 of the fourth embodiment are similar to those of the second embodiment. However, the fourth embodiment is different from the second and third embodiments in that a determination unit 180 collectively determines tabu tenure for all state variables at a certain iteration interval.

In the example of the fourth embodiment, for a state variable $x_i$, Frequency = (the number of times of update of a value of the state variable $x_i$)/(the number of iterations) is satisfied. A value range of the Frequency is 0.0 to 1.0. For example, in a case where tabu tenure for the corresponding state variable is 1 and the state variable is changed every time, the Frequency becomes 1.0. On the other hand, in a case where the value of the corresponding state variable is not changed even once, the Frequency becomes 0.0. A calculation expression of Impact is the same as that of the second embodiment.

Next, a processing procedure of the data processing device 100 of the fourth embodiment will be described.

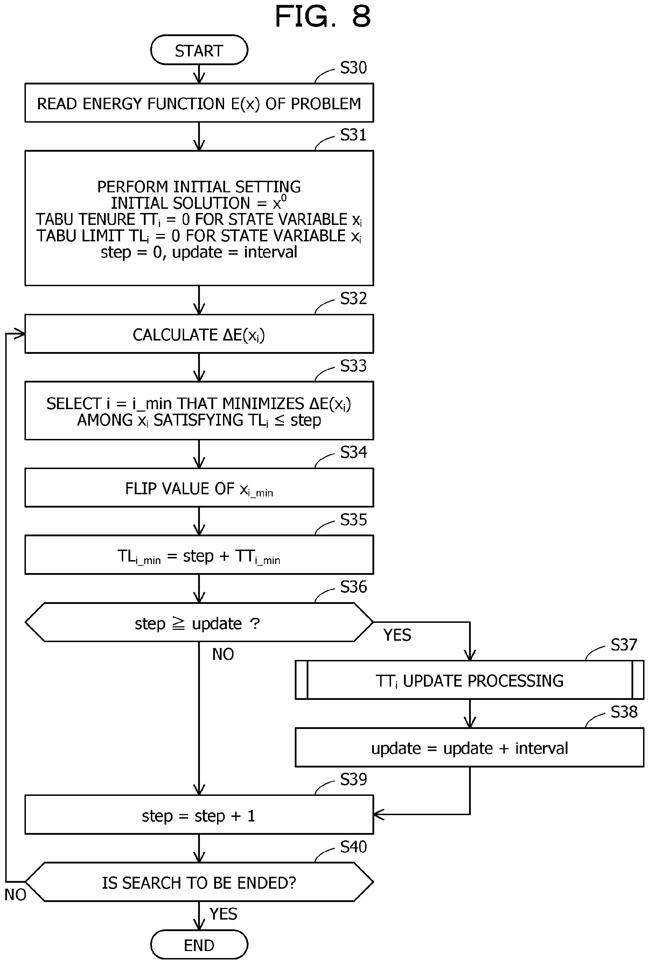

FIG. 8 is a flowchart illustrating an example of a solution search of the fourth embodiment.

(S30) A search unit 170 reads an energy function E(x) of a problem.

(S31) The search unit 170 performs initial setting. In the initial setting, an initial solution $x^0$, tabu tenure $TT_i = 0$ for the state variable $x_i$, a tabu limit $TL_i = 0$ for the state variable $x_i$, and a variable step = 0 are set. The variable step is a variable used for counting the number of iterations from a start of the search. Furthermore, in the initial setting, a value interval is set for a variable update indicating a timing to update tabu tenure of each state variable. The value interval represents a cycle (iteration interval) of updating the tabu tenure. For example, a value such as 100 to 1000 is preset as the interval.

The initial solution $x^0$ may be generated by randomly determining a value of each state variable using, for example, a random number or the like. Furthermore, the tabu tenure $TT_i$ and the tabu limit $TL_i$ are set for all indices i, and are held in the storage unit such as the RAM 108b used by the search unit 170. Furthermore, in the initial setting, a final value of the number of iterations used for end determination of the solution search is also set.

(S32) The search unit 170 calculates $\Delta E(x_i)$ for all $x_i$.

(S33) The search unit 170 selects an index i = i_min that minimizes the $\Delta E(x_i)$ among $x_i$ satisfying $TL_i \leq$ step.

(S34) The search unit 170 flips a value of a state variable $x_{i\_min}$. Note that the search unit 170 stores, in the solution storage unit 130, a solution obtained by flipping the value of the state variable $x_{i\_min}$ and energy of the solution. For example, the search unit 170 may preferentially store, in the solution storage unit 130, a predetermined number of solutions having low energy among solutions obtained so far. Furthermore, the search unit 170 records, in the history storage unit 150, a current step value and the index i_min of the state variable $x_{i\_min}$ whose value has been flipped this time in association with each other.

(S35) The search unit 170 sets $TL_{i\_min}$ = step + $TT_{i\_min}$.

(S36) The search unit 170 determines whether or not step $\geq$ update is satisfied. In a case where step $\geq$ update is satisfied, the processing proceeds to step S37. In a case where step < update is satisfied, the processing proceeds to step S39.

(S37) The determination unit 180 performs tabu tenure $TT_i$ update processing for all the state variables. The $TT_i$ determined by the determination unit 180 is set in the search unit 170 by a setting unit 190. Details of the $TT_i$ update processing will be described later.

(S38) The search unit 170 sets update = update + interval.

(S39) The search unit 170 sets step = step + 1.

(S40) The search unit 170 determines whether or not the search is to be ended. In a case where the search is to be ended, the solution search ends. In a case where the search is to be ended, the search unit 170 outputs a predetermined number of solutions by giving priority to a solution with minimum energy or a solution with low energy held in the solution storage unit 130. In a case where the search is to be continued, the processing proceeds to step S32. For example, the search unit 170 determines that the search is to be ended in a case where step > (a predetermined final value) is satisfied, and determines that the search is to be continued in a case where step $\leq$ (the predetermined final value) is satisfied.

Note that, in step S33, in a case where a minimum value of energy of solutions obtained so far is updated by flipping the state variable $x_i$, the search unit 170 may select the i = i_min regardless of the $TL_i$.

Furthermore, in step S34, the search unit 170 does not have to store, in the solution storage unit 130, the index obtained by flipping the value for all the iterations as history information, and it is sufficient that history information for a certain period of time needed for determining tabu tenure is stored.

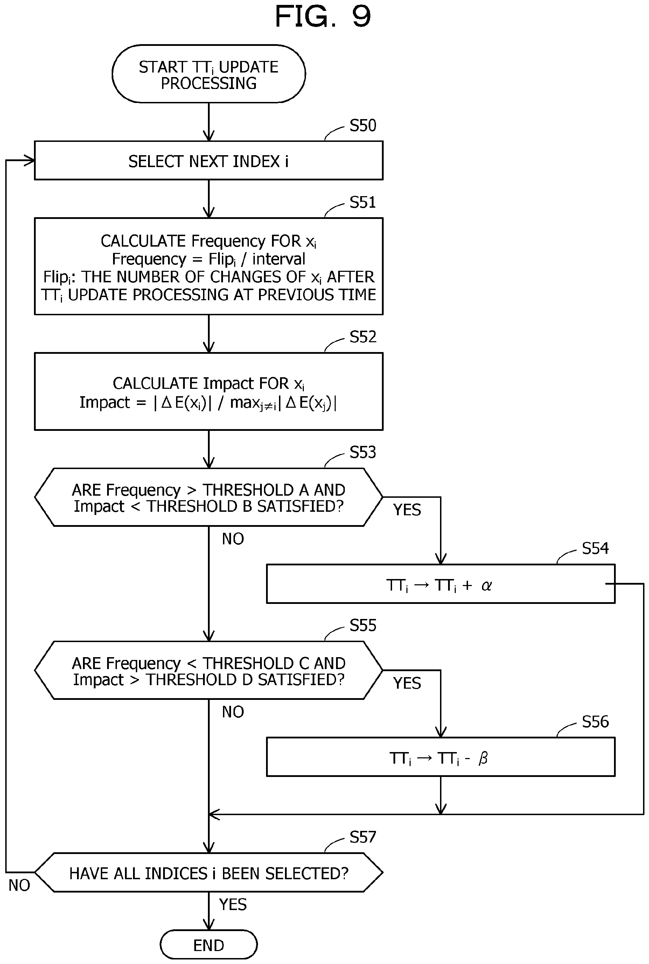

FIG. 9 is a flowchart illustrating an example of the $TT_i$ update processing.

The $TT_i$ update processing corresponds to step S37.

(S50) The determination unit 180 selects the next index i as a determination object of the tabu tenure $TT_i$.

(S51) The determination unit 180 calculates the index value Frequency of an update frequency for the $x_i$. The Frequency = Flipi/interval is satisfied. The $Flip_i$ is the number of changes of the $x_i$ after the $TT_i$ update processing at a previous time.

Note that the determination unit 180 acquires the $TT_i$ from a tabu tenure storage unit 140. The determination unit 180 acquires the $Flip_i$ from the history storage unit 150. For example, the determination unit 180 may obtain the $Flip_i$ by counting the number of times of update of the value of the $x_i$ from an iteration (= current step - interval) in which the $TT_i$ update processing at the previous time is performed to the present based on history information stored in the history storage unit 150.

(S52) The determination unit 180 calculates the index value Impact of an energy change amount for the $x_i$. The Impact = $|\Delta E(x_i)|/max_{j \neq i}|\Delta E(x_j)|$ is satisfied.

(S53) The determination unit 180 determines whether or not the Frequency > a threshold A and the Impact < a threshold B are satisfied. In a case where the Frequency > the threshold A and the Impact < the threshold B are satisfied, the processing proceeds to step S54. In a case where at least one of the Frequency $\leq$ the threshold A and the Impact $\geq$ the threshold B is satisfied, the processing proceeds to step S55. The thresholds A and B are determined in advance by a user.

(S54) The determination unit 180 updates the $TT_i$ to $TT_i + \alpha$. In other words, the determination unit 180 increases the $TT_i$ by $\alpha$. The a is determined in advance by the user. The determination unit 180 stores the updated Tri in the tabu tenure storage unit 140 in association with the index i. The setting unit 190 sets the updated Tri for the state variable $x_i$ in the search unit 170. Then, the processing proceeds to step S57.

(S55) The determination unit 180 determines whether or not the Frequency < a threshold C and the Impact > a threshold D are satisfied. In a case where the Frequency < the threshold C and the Impact > the threshold D are satisfied, the processing proceeds to step S56. In a case where at least one of the Frequency $\geq$ the threshold C and the Impact $\leq$ the threshold D is satisfied, the processing proceeds to steps S57 without changing the Tri. The thresholds C and D are determined in advance by the user.

(S56) The determination unit 180 updates the $TT_i$ to $TT_i - \beta$. In other words, the determination unit 180 decreases the $TT_i$ by $\beta$. The $\beta$ is determined in advance by the user. The determination unit 180 stores the updated Tri in the tabu tenure storage unit 140 in association with the index i. The setting unit 190 sets the updated Tri for the state variable $x_i$ in the search unit 170.

(S57) The determination unit 180 determines whether or not all the indices i have been selected. In a case where all the indices i have been selected, the $TT_i$ update processing ends. In a case where there is an unselected index i, the processing proceeds to step S50. In step S50, the unselected index i becomes the next selection candidate.

In this manner, the determination unit 180 adaptively determines tabu tenure for each state variable based on the two index values of the Frequency and the Impact. As a result, the data processing device 100 may appropriately determine the tabu tenure. Furthermore, the data processing device 100 may appropriately determine a period of time during which update of a value is suppressed for each state variable in a solution search based on the determined tabu tenure. As a result, the data processing device 100 may increase a possibility of reaching a better solution, and improve solution finding performance.

Furthermore, the data processing device 100 may adjust a change timing of the tabu tenure of all the state variables by the interval value. For example, by appropriately setting the interval value according to a problem, there is a possibility that solution finding performance for the problem may be improved. Furthermore, by setting the interval to a large value, the data processing device 100 may reduce the number of times of executing the tabu tenure $TT_i$ update processing, and improve the solution finding performance while reducing a load associated with the update processing.

Meanwhile, in the second to fourth embodiments, it is assumed that the determination unit 180 compares each of the Frequency and the Impact with the corresponding threshold, and increases or decreases the tabu tenure according to the comparison. However, the determination unit 180 may use another method. Thus, another example of the processing of the determination unit 180 will be described.

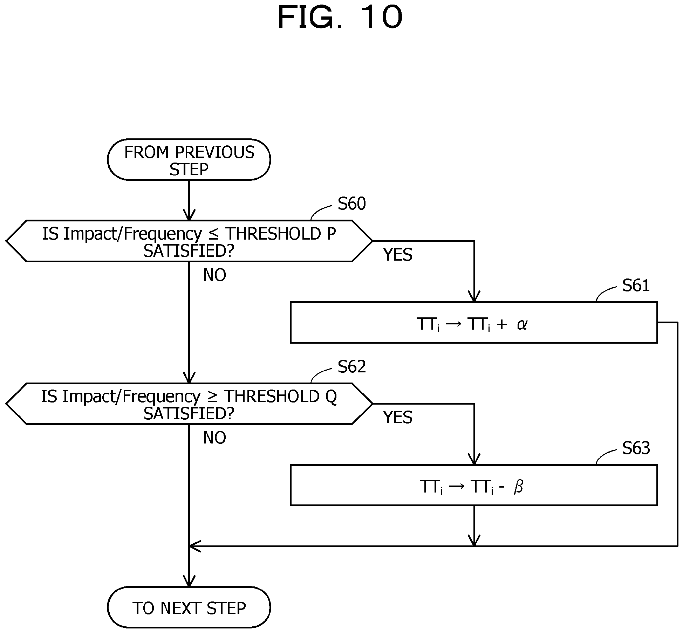

FIG. 10 is a flowchart illustrating another example of $TT_i$ update determination.

Steps S60 to S63 described below may be executed instead of steps S22 to S25 of the second and third embodiments. In a case where steps S60 to S63 are applied to the second and third embodiments, i = i_min is satisfied. Furthermore, a previous step of step S60 is step S21. Moreover, the next step of step S61, step S62 NO and step S63 is the end of the $TT_{i\_min}$ update processing.

Furthermore, steps S60 to S63 may be executed instead of steps S53 to S56 of the fourth embodiment. In a case where steps S60 to S63 are applied to the fourth embodiment, a previous step of step S60 is step S52. Furthermore, the next step of step S61, step S62 NO, and step S63 is step S57.

(S60) The determination unit 180 determines whether or not the Impact/Frequency $\leq$ a threshold P is satisfied. In a case where the Impact/Frequency $\leq$ the threshold P is satisfied, the processing proceeds to step S61. In a case where the Impact/Frequency > the threshold P is satisfied, the processing proceeds to step S62. The threshold P is predetermined by the user.

(S61) The determination unit 180 updates the $TT_i$ to $TT_i + \alpha$. In other words, the determination unit 180 increases

the $TT_i$ by $\alpha$. The a is determined in advance by the user. The determination unit 180 stores the updated $TT_i$ in the tabu tenure storage unit 140 in association with the index i. The setting unit 190 sets the updated $TT_i$ for the state variable $x_i$ in the search unit 170. Then, the processing proceeds to the next step.

(S62) The determination unit 180 determines whether or not the Impact/Frequency $\geq$ a threshold Q is satisfied. In a case where the Impact/Frequency $\geq$ the threshold Q is satisfied, the processing proceeds to step S63. In a case where the Impact/Frequency < the threshold Q is satisfied, the processing proceeds to the next step. The threshold Q is predetermined by the user. $Q \geq P$ is satisfied.

(S63) The determination unit 180 updates the $TT_i$ to $TT_i - \beta$. In other words, the determination unit 180 decreases the $TT_i$ by $\beta$. The $\beta$ is determined in advance by the user. The determination unit 180 stores the updated $TT_i$ in the tabu tenure storage unit 140 in association with the index i. The setting unit 190 sets the updated $TT_i$ for the state variable $x_i$ in the search unit 170. Then, the processing proceeds to the next step.

In this manner, the determination unit 180 may compare the value obtained by dividing the index value Impact by the index value Frequency with the threshold for the state variable $x_i$, and change the $TT_i$ according to the comparison. As a result, the data processing device 100 may appropriately determine the $TT_i$ for each state variable, and may improve the solution finding performance.

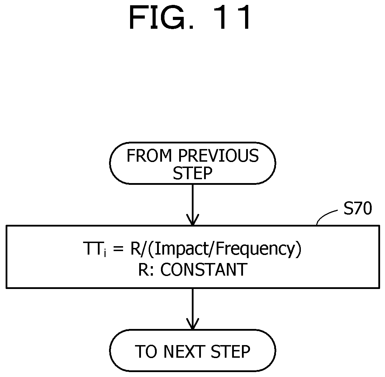

FIG. 11 is a flowchart illustrating another example of the $TT_i$ update method.

Step S70 described below may be executed instead of steps S22 to S25 of the second and third embodiments. In a case where step S70 is applied to the second and third embodiments, i = i_min is satisfied. Furthermore, a previous step of step S70 is step S21. Moreover, the next steps of step S70 is the end of the $TT_{i\_min}$ update processing.

Furthermore, step S70 may be executed instead of steps S53 to S56 of the fourth embodiment. In a case where step S70 is applied to the fourth embodiment, a previous step of step S70 is step S52. Furthermore, the next step of step S70 is step S57.

(S70) The determination unit 180 sets $TT_i = R/(Impact/Frequency)$. Here, the R is a constant common to all the state variables. The constant R is predetermined by the user. The setting unit 190 sets the updated $TT_i$ for the state variable $x_i$ in the search unit 170. Then, the processing proceeds to the next step.

In this manner, for the state variable $x_i$, the determination unit 180 may determine, as the $TT_i$, the value obtained by multiplying the value obtained by dividing the constant R by the index value Impact by the index value Frequency. As a result, the data processing device 100 may appropriately determine the $TT_i$ for each state variable, and may improve the solution finding performance.

Next, an example in which the solution finding performance is improved by appropriate setting of tabu tenure will be described.

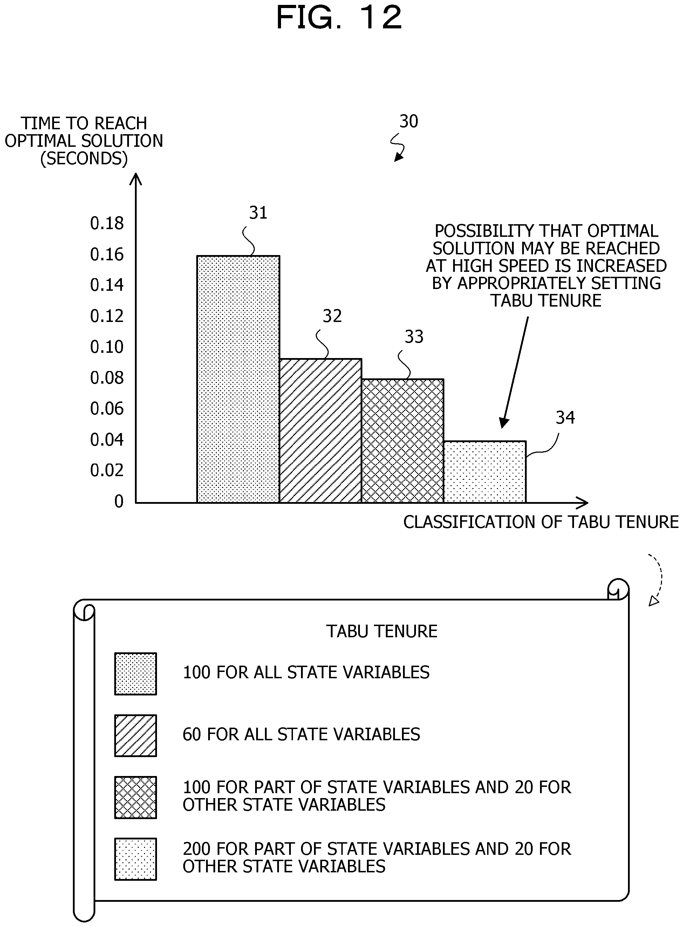

FIG. 12 is a diagram illustrating an example of a relationship between tabu tenure and a time to reach an optimal solution.

A graph 30 indicates a result of an experiment in which solution finding by the tabu search method is performed for a problem for which an optimal solution has been found. A horizontal axis of the graph 30 indicates classification of tabu tenure used. A vertical axis of the graph 30 indicates a time to reach the optimal solution. A unit of the time to reach is seconds.

A bin 31 is a case where the tabu tenure is 100 for all the state variables.

A bin 32 is a case where the tabu tenure is 60 for all the state variables.

A bin 33 is a case where the tabu tenure is 100 for a part of the state variables and the tabu tenure is 20 for other state variables.

A bin 34 is a case where the tabu tenure is 200 for a part of the state variables and the tabu tenure is 20 for other state variables.

As indicated by the graph 30, a possibility that the optimal solution may be reached at a high speed is increased by appropriately setting the tabu tenure. Furthermore, by appropriately setting the tabu tenure for each state variable, the possibility that the optimal solution may be reached at a high speed is increased than that when uniform tabu tenure is set for all the state variables.

According to the data processing device 100 of the second to fourth embodiments, tabu tenure for each state variable is appropriately set based on the index value Frequency and the index value Impact. As a result, the data processing device 100 may increase a possibility of reaching a better solution in a relatively short time. In this manner, the data processing device 100 may improve the solution finding performance.

As described above, the data processing device 100 executes the following processing. Note that, as described above, the processing of the determination unit 180 and the setting unit 190 may be executed by the processor 101 implemented by the CPU, in other words, the general-purpose processor. Alternatively, the processing of the determination unit 180 and the setting unit 190 may be executed by the processor 108a implemented by the GPU, the FPGA, or the like, in other words, the dedicated processor.

In a solution search based on an evaluation function including a plurality of state variables, when a value of any one state variable among the plurality of state variables is updated, the determination unit 180 calculates a first index value related to a change amount of a value of the evaluation function in a case where a value of a first state variable among the plurality of state variables is updated from values of the plurality of state variables before the update. Based on the first index value, the determination unit 180 determines a length of a period of time during which update of the value of the first state variable is suppressed after the value of the first state variable is updated.

As a result, the data processing device 100 may improve the solution finding performance. An energy function is an example of the evaluation function. The length of the period of time during which the update of the value of the first state variable is suppressed after the value of the first state variable is updated, in other words, a length of an update suppression period of time corresponds to tabu tenure. The length of the period of time during which the update of the value of the first state variable is suppressed may also be referred to as a length of a period of time during which the value of the first state variable is fixed. The index value Impact in the second to fourth embodiments is an example of the first index value.

The determination unit 180 calculates the first index value by dividing an absolute value of the change amount in a case where the value of the first state variable is updated from values of the plurality of state variables before the update of this time by a maximum value of the absolute value of the change amount in a case where the value of the any one state variable is updated from the values of the plurality of state variables before the update of this time.

As a result, the data processing device 100 may perform relative evaluation of the change amount of the value of the evaluation function by the update of the value of the first state variable with the first index value, and may appropriately determine the length of the update suppression period of time based on the first index value.

For example, in a case where the first index value is smaller than a first threshold, the determination unit 180 increases the length of the period of time during which the update of the value is suppressed. In a case where the first index value is larger than a second threshold larger than the first threshold, the determination unit 180 decreases the length of the period of time during which the update of the value is suppressed. In a case where the first index value is equal to or larger than the first threshold and equal to or smaller than the second threshold, the determination unit 180 does not change the length of the period of time during which the update of the value is suppressed.

As a result, the data processing device 100 may appropriately determine the length of the update suppression period of time for the first state variable, and may improve the solution finding performance.

Note that the determination unit 180 may set a value obtained by dividing a constant common to all the variables by the first index value as the length of the period of time during which the update of the value of the first state variable is suppressed.

The first state variable may be the state variable whose value has been updated this time in the solution search. As a result, the data processing device 100 may finely adjust the length of the update suppression period of time for each state variable according to progress of the solution search. As a result, the data processing device 100 may improve the solution finding performance.

Note that the determination unit 180 may count the number of times the value of the first state variable has been updated, and may calculate the first index value for the first state variable and determine the length of the period of time during which the update of the value based on the first index value is suppressed at a timing when the number of times reaches a predetermined number of times.

Furthermore, every time the value of the state variable is updated a predetermined number of times in the solution search, the determination unit 180 may set each of the plurality of state variables as the first state variable, and calculate the first index value and determine the length of the period of time during which the update of the value is suppressed for each of the first state variables.

As a result, the data processing device 100 may appropriately determine the length of the period of time for each state variable, and may improve the solution finding performance.

Furthermore, the determination unit 180 may calculate a second index value related to an update frequency of the value of the first state variable together with the first index value. The determination unit 180 may determine the length of the period of time during which the update of the value of the first state variable is suppressed based on the first index value and the second index value.

As a result, the data processing device 100 may more appropriately determine the length of the period of time for each state variable, and may improve the solution finding performance. The index value Frequency in the second to fourth embodiments is an example of the second index value.

The first state variable may be the state variable whose value has been updated this time in the solution search. In that case, the determination unit 180 may calculate the second index value by dividing the length of the period of time set for the first state variable by a first time interval from update of a previous time of the value of the first state variable to the update of this time. The (step - $step_{prev}$) in the second embodiment corresponds to the first time interval.

As a result, the data processing device 100 may easily obtain the second index value as an index representing a recent update frequency of the first state variable. As a result, the data processing device 100 may more appropriately determine the length of the update suppression period of time for the first state variable based on the first index value and the second index value, and may improve the solution finding performance.

Furthermore, in a case where the first state variable is the state variable whose value has been updated this time in the solution search, the determination unit 180 may calculate the second index value as follows. After performing the processing of determining the length of the period of time (update suppression period of time) corresponding to the first state variable, the determination unit 180 determines whether or not the value of the first state variable has been updated a predetermined number of times. Then, in a case where the first state variable has been updated the predetermined number of times, the determination unit 180 calculates the second index value by dividing a value obtained by multiplying the length of the period of time set for the first state variable by the predetermined number of times by a second time interval from when the value of the first state variable is updated the predetermined number of times before to the update of this time. The M in the third embodiment corresponds to the predetermined number of times. The (step - step$_{prev}$) in the third embodiment corresponds to the second time interval.

As a result, the data processing device 100 may easily obtain the second index value as an index representing a recent update frequency of the first state variable. As a result, the data processing device 100 may more appropriately determine the length of the update suppression period of time for the first state variable based on the first index value and the second index value, and may improve the solution finding performance.

Furthermore, the determination unit 180 may select each of the plurality of state variables as the first state variable every time the value of the any one state variable is updated the predetermined number of times in the solution search. In this case, the determination unit 180 calculates the first index value for each first state variable. The determination unit 180 calculates the second index value for each first state variable by dividing the number of times the value of the first state variable has been updated since the length of the period of time corresponding to the first state variable has been determined in a previous time by the predetermined number of times. Then, the determination unit 180 determines, for each first state variable, the length of the period of time during which the update of the value is suppressed based on the first index value and the second index value. The interval in the fourth embodiment corresponds to the predetermined number of times. The Flip$_i$ in the fourth embodiment corresponds to the number of times the value of the first state variable has been updated since the length of the period of time corresponding to the first state variable has been determined in the previous time.

As a result, the data processing device 100 may easily obtain the second index value as an index representing a recent update frequency of the first state variable. As a result, the data processing device 100 may more appropriately determine the length of the update suppression period of time for the first state variable based on the first index value and the second index value, and may improve the solution finding performance.

For example, in a case where the first index value is smaller than the first threshold and the second index value is larger than a third threshold, the determination unit 180 increases the length of the period of time during which the update of the value is suppressed. In a case where the first index value is larger than the second threshold larger than the first threshold and the second index value is smaller than a fourth threshold smaller than the third threshold, the determination unit 180 decreases the length of the period of time. In at least one of a case where the first index value is equal to or larger than the first threshold and equal to or smaller than the second threshold and a case where the second index value is equal to or larger than the fourth threshold and equal to or smaller than the third threshold, the determination unit 180 does not change the length of the period of time.

As a result, the data processing device 100 may appropriately determine the length of the update suppression period of time for the first state variable, and may improve the solution finding performance.

Furthermore, the determination unit 180 may calculate a third index value obtained by dividing the first index value by the second index value. For example, in a case where the third index value is equal to or smaller than a fifth threshold, the determination unit 180 increases the length of the period of time during which the update of the value is suppressed. In a case where the third index value is equal to or larger than a sixth threshold larger than the fifth threshold, the determination unit 180 decreases the length of the period of time. In a case where the third index value is larger than the fifth threshold and smaller than the sixth threshold, the determination unit 180 does not change the length of the period of time.

As a result, the data processing device 100 may appropriately determine the length of the update suppression period of time for the first state variable, and may improve the solution finding performance. The Impact/Frequency described above is an example of the third index value.

Alternatively, the determination unit 180 may set a value obtained by multiplying a value obtained by dividing a predetermined constant by the first index value by the second index value as the length of the period of time during which the update of the value of the first state variable is suppressed.

As a result, the data processing device 100 may appropriately determine the length of the update suppression period of time for the first state variable, and may improve the solution finding performance.

Furthermore, the first state variable may be the state variable whose value has been updated this time in the solution search. In this case, when the length of the period of time during which the update of the value is suppressed for the first state variable is determined, the setting unit 190 sets, based on the determined length of the period of time, the period of time during which the update of the value of the first state variable is suppressed immediately after the update of this time.

As a result, the data processing device 100 may appropriately control the search unit 170 so as not to change the value of the first state variable during the period of time, and may improve the solution finding performance. Note that, as described above, the setting unit 190 may set the period of time during which the update of the value of the corresponding state variable is suppressed by specifying the number of iterations at a termination of the update suppression period of time obtained by adding the number of iterations corresponding to the length of the period of time to the current number of iterations.

Alternatively, the setting unit 190 may set the period of time during which the update of the value of the state variable is suppressed immediately after the update of this time based on the length of the determined period of time for the state variable whose value has been updated this time in the solution search. For example, in a case where the state variable whose value has been updated this time in the solution search is the same as the first state variable, the determination unit 180 may calculate the first index value for the first state variable and re-determine the length of the period of time ($\Pi_{i\_min}$) after setting the period of time for the first state variable ($x_{i\_min}$) (for example, after setting $TL_{i\_min}$).

As a result, the data processing device 100 may appropriately control the search unit 170 so as not to change the value of the corresponding state variable during the period of time, and may improve the solution finding performance.

Note that the information processing of the first embodiment may be implemented by causing the processing unit 12 to execute a program. Furthermore, the information processing of the second to fourth embodiments may be implemented by causing the processor 101 to execute a program. The program may be recorded in the computer-readable recording medium 113.

For example, the program may be distributed by distributing the recording medium 113 in which the program is recorded. Furthermore, the program may be stored in another computer and distributed through a network. For example, a computer may store (install), in a storage device such as the RAM 102 or the HDD 103, the program recorded in the recording medium 113 or received from another computer, and read the program from the storage device to execute the program.

## Claims

1. A data processing program comprising instructions which, when executed by a computer, cause the computer to execute processing comprising:

   calculating, when a value of any one state variable among a plurality of state variables is updated in a solution search based on an evaluation function that includes the plurality of state variables, a first index value related to a change amount of a value of the evaluation function in a case where a value of a first state variable among the plurality of state variables is updated from values of the plurality of state variables before the update; and determining, based on the first index value, a length of a period of time during which update of the value of the first state variable is suppressed after the value of the first state variable is updated.

2. The data processing program according to claim 1, wherein,
   in the calculating of the first index value, the first index value is calculated by dividing an absolute value of the change amount in a case where the value of the first state variable is updated from the values of the plurality of state variables before the update of this time by a maximum value of the absolute value of the change amount in a case where the value of the any one state variable is updated from the values of the plurality of state variables before the update of this time.

3. The data processing program according to claim 1, wherein,

   in the determining of the length of the period of time,
   in a case where the first index value is smaller than a first threshold, the length of the period of time is increased,
   in a case where the first index value is larger than a second threshold larger than the first threshold, the length of the period of time is decreased, and
   in a case where the first index value is equal to or larger than the first threshold and equal to or smaller than the second threshold, the length of the period of time is not changed.

4. The data processing program according to claim 1, wherein
   the first state variable is the state variable whose value has been updated this time in the solution search.

5. The data processing program according to claim 1, wherein,
   every time the value of the state variable is updated a predetermined number of times in the solution search, by setting each of the plurality of state variables as the first state variable, the first index value is calculated and the length of the period of time is determined for each of the first state variables.

6. The data processing program according to claim 1, wherein

a second index value related to an update frequency of the value of the first state variable is calculated together with the first index value, and
in the determining of the length of the period of time, the length of the period of time is determined based on the first index value and the second index value.

7. The data processing program according to claim 6, wherein

the first state variable is the state variable whose value has been updated this time in the solution search, and
in the calculating of the second index value, the second index value is calculated by dividing the length of the period of time set for the first state variable by a first time interval from update of a previous time of the value of the first state variable to the update of this time.

8. The data processing program according to claim 6, wherein

the first state variable is the state variable whose value has been updated this time in the solution search, and
in the calculating of the second index value,
after the processing of determining the length of the period of time that corresponds to the first state variable is performed, whether or not the value of the first state variable has been updated a predetermined number of times is determined, and
in a case where the first state variable has been updated the predetermined number of times, the second index value is calculated by dividing a value obtained by multiplying the length of the period of time set for the first state variable by the predetermined number of times by a second time interval from when the value of the first state variable is updated the predetermined number of times before to the update of this time.

9. The data processing program according to claim 6, wherein

each of the plurality of state variables is selected as the first state variable every time the value of the any one state variable is updated a predetermined number of times in the solution search,
in the calculating of the first index value, the first index value is calculated for each of the first state variables,
in the calculating of the second index value, the second index value is calculated for each of the first state variables by dividing the number of times the value of the first state variable has been updated since the length of the period of time that corresponds to the first state variable has been determined in a previous time by the predetermined number of times, and
in the determining of the length of the period of time, the length of the period of time is determined for each of the first state variables based on the first index value and the second index value.

10. The data processing program according to claim 6, wherein,

in the determining of the length of the period of time,
in a case where the first index value is smaller than a first threshold and the second index value is larger than a third threshold, the length of the period of time is increased,
in a case where the first index value is larger than a second threshold larger than the first threshold and the second index value is smaller than a fourth threshold smaller than the third threshold, the length of the period of time is decreased, and
in a case where the first index value is equal to or larger than the first threshold and equal to or smaller than the second threshold or in a case where the second index value is equal to or larger than the fourth threshold and equal to or smaller than the third threshold, or in a case where the cases are combined, the length of the period of time is not changed.

11. The data processing program according to claim 6, wherein,

in the determining of the length of the period of time,
a third index value obtained by dividing the first index value by the second index value is calculated,
in a case where the third index value is equal to or smaller than a fifth threshold, the length of the period of time is

17

increased,

in a case where the third index value is equal to or larger than a sixth threshold larger than the fifth threshold, the length of the period of time is decreased, and

in a case where the third index value is equal to or larger than the fifth threshold and equal to or smaller than the sixth threshold, the length of the period of time is not changed.

12. The data processing program according to claim 6, wherein,

in the determining of the length of the period of time, a value obtained by multiplying a value obtained by dividing a predetermined constant by the first index value by the second index value is set as the length of the period of time.

13. The data processing program according to claim 1, wherein

the first state variable is the state variable whose value has been updated this time in the solution search, and when the length of the period of time is determined, based on the determined length of the period of time, the period of time during which the update of the value of the first state variable is suppressed immediately after the update of this time is set.

14. The data processing program according to claim 1, wherein

the period of time during which the update of the value of the state variable is suppressed immediately after the update of this time is set based on the determined length of the period of time for the state variable whose value has been updated this time in the solution search.

15. A data processing method implemented by a computer, the data processing method comprising:

calculating, when a value of any one state variable among a plurality of state variables is updated in a solution search based on an evaluation function that includes the plurality of state variables, a first index value related to a change amount of a value of the evaluation function in a case where a value of a first state variable among the plurality of state variables is updated from values of the plurality of state variables before the update; and determining, based on the first index value, a length of a period of time during which update of the value of the first state variable is suppressed after the value of the first state variable is updated.

16. A data processing apparatus comprising:

a storage unit configured to store, for each state variable of a plurality of state variables, a length of a period of time during which update of a value of the each state variable is suppressed after the value of the each state variable is updated; and

a processing unit configured to perform processing including:

calculating, when a value of any one state variable among the plurality of state variables is updated in a solution search based on an evaluation function that includes the plurality of state variables, a first index value related to a change amount of a value of the evaluation function in a case where a value of a first state variable among the plurality of state variables is updated from values of the plurality of state variables before the update; and

determining, based on the first index value, a length of a period of time during which update of the value of the first state variable is suppressed after the value of the first state variable is updated.

# FIG. 1

# FIG. 2

**DATA PROCESSING DEVICE** 100

101 PROCESSOR

102 RAM

103 HDD

104 GPU

105 INPUT INTERFACE

106 MEDIUM READER

107 COMMUNICATION INTERFACE

BUS

111

112

113

114 NETWORK

108 ACCELERATOR CARD

108a PROCESSOR

108b RAM

# FIG. 3

DATA PROCESSING DEVICE 100

OPTIMIZATION PROBLEM STORAGE UNIT 120

SETTING UNIT 190

TABU TENURE STORAGE UNIT 140

SEARCH UNIT 170

HISTORY STORAGE UNIT 150

DETERMINATION UNIT 180

SOLUTION STORAGE UNIT 130

SETTING VALUE STORAGE UNIT 160

# FIG. 4

SEARCH UNIT

TABU SEARCH

| STATE VARIABLE x1 | 0 0 0 1 1 1 0 0 |
| STATE VARIABLE x2 | 0 1 1 1 0 0 0 1 |
| STATE VARIABLE x3 | 0 0 1 1 1 0 0 0 |

TIME

170

SEARCH HISTORY

SET TABU TENURE

DECREASE TABU TENURE

ENERGY CHANGE AMOUNT

UPDATE FREQUENCY

INCREASE TABU TENURE

20

# FIG. 5

START

S10

READ ENERGY FUNCTION E(x) OF PROBLEM

S11

PERFORM INITIAL SETTING
INITIAL SOLUTION = $x^0$
TABU TENURE $TT_i$ = 0 FOR STATE VARIABLE $x_i$
TABU LIMIT $TL_i$ = 0 FOR STATE VARIABLE $x_i$
step = 0

S12

CALCULATE $\Delta E(x_i)$

S13

SELECT i = i_min THAT MINIMIZES $\Delta E(x_i)$
AMONG $x_i$ SATISFYING $TL_i$ ≤ step

S14

FLIP VALUE OF $x_{i\_min}$

S15

$TT_{i\_min}$ UPDATE PROCESSING

S16

$TL_{i\_min}$ = step + $TT_{i\_min}$

S17

step = step + 1

S18

IS SEARCH TO BE ENDED?

NO

YES

END

# FIG. 6

START $TT_{i\_min}$ UPDATE PROCESSING

S20

CALCULATE Frequency FOR $x_{i\_min}$
Frequency = $TT_{i\_min}$ / (step-step$_{prev}$)
step$_{prev}$: step IN WHICH $x_{i\_min}$ HAS BEEN
FLIPPED AT PREVIOUS TIME

S21

CALCULATE Impact FOR $x_{i\_min}$
Impact = $|\Delta E(x_{i\_min})|$ / $\max_i |\Delta E(x_i)|$

S22

ARE Frequency > THRESHOLD A AND
Impact < THRESHOLD B SATISFIED?

YES

NO

S23

$TT_{i\_min} \rightarrow TT_{i\_min} + \alpha$

S24

ARE Frequency < THRESHOLD C AND
Impact > THRESHOLD D SATISFIED?

YES

NO

S25

$TT_{i\_min} \rightarrow TT_{i\_min} - \beta$

END

# FIG. 7

START TT$_{i\_min}$ UPDATE PROCESSING

S20a

HAS $x_{i\_min}$ BEEN UPDATED M TIMES AFTER TT$_{i\_min}$ UPDATE PROCESSING AT PREVIOUS TIME FOR $x_{i\_min}$?

NO

YES

S20b

CALCULATE Frequency FOR $x_{i\_min}$
Frequency = TT$_{i\_min}$ × M / (step-step$_{prev}$)
step$_{prev}$: step IN WHICH $x_{i\_min}$ HAS BEEN FLIPPED M TIMES BEFORE

S21

CALCULATE Impact FOR $x_{i\_min}$
Impact = $|\Delta E(x_{i\_min})|$ / max$_i|\Delta E(x_i)|$

S22

ARE Frequency > THRESHOLD A AND Impact < THRESHOLD B SATISFIED?

YES

NO

S23

TT$_{i\_min}$ → TT$_{i\_min}$ + $\alpha$

S24

ARE Frequency < THRESHOLD C AND Impact > THRESHOLD D SATISFIED?

YES

NO

S25

TT$_{i\_min}$ → TT$_{i\_min}$ - $\beta$

END

# FIG. 8

```
            ( START )
                │                    S30
                ▼
┌─────────────────────────────────┐
│  READ ENERGY FUNCTION E(x) OF PROBLEM │
└─────────────────────────────────┘
                │                    S31
                ▼
┌─────────────────────────────────┐
│       PERFORM INITIAL SETTING     │
│        INITIAL SOLUTION = x⁰      │
│ TABU TENURE TTᵢ = 0 FOR STATE VARIABLE xᵢ │
│ TABU LIMIT TLᵢ = 0 FOR STATE VARIABLE xᵢ  │
│      step = 0, update = interval │
└─────────────────────────────────┘
                │                    S32
                ▼
┌─────────────────────────────────┐
│          CALCULATE ΔE(xᵢ)         │
└─────────────────────────────────┘
                │                    S33
                ▼
┌─────────────────────────────────┐
│  SELECT i = i_min THAT MINIMIZES ΔE(xᵢ) │
│      AMONG xᵢ SATISFYING TLᵢ ≤ step │
└─────────────────────────────────┘
                │                    S34
                ▼
┌─────────────────────────────────┐
│        FLIP VALUE OF xᵢ_min       │
└─────────────────────────────────┘
                │                    S35
                ▼
┌─────────────────────────────────┐
│      TLᵢ_min = step + TTᵢ_min     │
└─────────────────────────────────┘
                │                    S36
                ▼
┌─────────────────────────────────┐    S37
│         step ≧ update ?          │──YES──►│ TTᵢ UPDATE PROCESSING │
└─────────────────────────────────┘                    │  S38
                │ NO                                     ▼
                │                         │ update = update + interval │
                │                                        │
                ▼              S39                       │
┌─────────────────────────────────┐◄──────────────────┘
│          step = step + 1         │
└─────────────────────────────────┘
                │                    S40
                ▼
┌─────────────────────────────────┐
│      IS SEARCH TO BE ENDED?      │──NO──►
└─────────────────────────────────┘
                │ YES
                ▼
            ( END )
```

$$\text{INITIAL SOLUTION} = x^0$$

$TABU\ TENURE\ TT_i = 0$ FOR STATE VARIABLE $x_i$

$TABU\ LIMIT\ TL_i = 0$ FOR STATE VARIABLE $x_i$

CALCULATE $\Delta E(x_i)$

SELECT $i = i\_min$ THAT MINIMIZES $\Delta E(x_i)$ AMONG $x_i$ SATISFYING $TL_i \leq step$

FLIP VALUE OF $x_{i\_min}$

$TL_{i\_min} = step + TT_{i\_min}$

$TT_i$ UPDATE PROCESSING

# FIG. 9

START $TT_i$ UPDATE PROCESSING

S50

SELECT NEXT INDEX i

S51

CALCULATE Frequency FOR $x_i$
Frequency = $Flip_i$ / interval
$Flip_i$: THE NUMBER OF CHANGES OF $x_i$ AFTER $TT_i$ UPDATE PROCESSING AT PREVIOUS TIME

S52

CALCULATE Impact FOR $x_i$
Impact = $|\Delta E(x_i)| / \max_{j \neq i} |\Delta E(x_j)|$

S53

ARE Frequency > THRESHOLD A AND Impact < THRESHOLD B SATISFIED?

NO

YES

S54

$TT_i \rightarrow TT_i + \alpha$

S55

ARE Frequency < THRESHOLD C AND Impact > THRESHOLD D SATISFIED?

NO

YES

S56

$TT_i \rightarrow TT_i - \beta$

S57

HAVE ALL INDICES i BEEN SELECTED?

NO

YES

END

# FIG. 10

```
        ┌─────────────────┐
        │ FROM PREVIOUS   │
        │     STEP        │
        └─────────────────┘
                 │
                 ▼                              S60
     ╱─────────────────────────────╲
    ╱  IS Impact/Frequency ≤ THRESHOLD P ╲──────────────┐
    ╲         SATISFIED?              ╱   YES            │
     ╲─────────────────────────────╱                    │
                 │ NO                                    │
                 │                                       ▼                    S61
                 │              ┌──────────────────────────────────────────┐
                 │              │         TT_i → TT_i + α                   │──┐
                 │              └──────────────────────────────────────────┘  │
                 │                                                             │
                 ▼                              S62                            │
     ╱─────────────────────────────╲                                          │
    ╱  IS Impact/Frequency ≥ THRESHOLD Q ╲──────────────┐                      │
    ╲         SATISFIED?              ╱   YES            │                      │
     ╲─────────────────────────────╱                    │                      │
                 │ NO                                    ▼                    S63│
                 │              ┌──────────────────────────────────────────┐  │
                 │              │         TT_i → TT_i - β                   │  │
                 │              └──────────────────────────────────────────┘  │
                 │                                       │                      │
                 ◄───────────────────────────────────────┘◄─────────────────────┘
                 │
                 ▼
        ┌─────────────────┐
        │  TO NEXT STEP   │
        └─────────────────┘
```

S60: IS Impact/Frequency ≤ THRESHOLD P SATISFIED?

S61: $TT_i \rightarrow TT_i + \alpha$

S62: IS Impact/Frequency ≥ THRESHOLD Q SATISFIED?

S63: $TT_i \rightarrow TT_i - \beta$

# FIG. 11

FROM PREVIOUS
STEP

$TT_i = R/(Impact/Frequency)$
R: CONSTANT

S70

TO NEXT STEP

# FIG. 12

TIME TO REACH
OPTIMAL SOLUTION
(SECONDS)

30

31

0.18
0.16
0.14
0.12
0.10
0.08
0.06
0.04
0.02
0

32

33

POSSIBILITY THAT OPTIMAL
SOLUTION MAY BE REACHED
AT HIGH SPEED IS INCREASED
BY APPROPRIATELY SETTING
TABU TENURE

34

CLASSIFICATION OF TABU TENURE

TABU TENURE

100 FOR ALL STATE VARIABLES

60 FOR ALL STATE VARIABLES

100 FOR PART OF STATE VARIABLES AND 20 FOR
OTHER STATE VARIABLES

200 FOR PART OF STATE VARIABLES AND 20 FOR
OTHER STATE VARIABLES

# EP 4 510 044 A1

| | Europäisches Patentamt<br>European Patent Office<br>Office européen des brevets | **EUROPEAN SEARCH REPORT** | **Application Number**<br>EP 24 18 2746 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHARLES MOUSSA ET AL: "Tabu-driven Quantum Neighborhood Samplers", ARXIV.ORG, CORNELL UNIVERSITY LIBRARY, 201 OLIN LIBRARY CORNELL UNIVERSITY ITHACA, NY 14853, 18 November 2020 (2020-11-18), XP081817548, * Sections 2.1, 3-3.3 * * abstract * | 1-16 | INV.<br>G06N3/08<br>G06N5/01 |
| | ----- | | |
| | | | **TECHNICAL FIELDS SEARCHED (IPC)**<br><br>G06N |

The present search report has been drawn up for all claims

| Place of search | Date of completion of the search | Examiner |
|---|---|---|
| The Hague | 20 November 2024 | Mariani, Giovanni |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003209926 A
- JP 2022164162 A
- US 20100088146
- US 20140344322